# EUROPÄISCHE PATENTSCHRIFT

(11) **EP 0 688 744 B1**
(45) Veröffentlichungstag und Bekanntmachung des Hinweises auf die Patenterteilung: **13.01.1999**
(21) Anmeldenummer: 95109472.1
(22) Anmeldetag: 19.06.1995
(51) Int. Cl.: C04B 24/30

(54) **Verwendung von Pfropfpolymeren auf Basis von Keton-Aldehyd-Kondensations- bzw. Co-Kondensationsprodukten**
Use of graft polymer based on ketone-aldehyde condensation-polymers and co-condensation polymer
Utilisation de polymères greffés à base de polymères condensés et co-condensés de kétones et aldéhydes

(30) Priorität: 21.06.1994 DE 4421715
(43) Veröffentlichungstag der Anmeldung: 27.12.1995
(73) Patentinhaber: SKW Trostberg Aktiengesellschaft, 83308 Trostberg (DE)
(72) Erfinder: Felixberger, Josef, Dr., D-83278 Traunstein (DE); Plank, Johann, Dr., D-83308 Trostberg (DE)
(74) Vertreter: Böhm, Brigitte, Dipl.-Chem. Dr.

(56) Entgegenhaltungen:
- EP-A- 0 632 186
- WO-A-95/01315
- DD-A- 79 580
- DE-A- 3 429 068
- DE-A- 4 322 112
- US-A- 5 355 955

## Beschreibung

Gegenstand der vorliegenden Erfindung ist die Verwendung von Pfropfpolymeren auf Basis von Keton-Aldehyd-Kondensationsprodukten bzw. Co-Kondensationsprodukten und/oder deren ein- oder mehrwertige Metallverbindungen als Erstarrungsverzögerer für wäßrige Bindemittelsuspensionen auf de Basis von Zement, Gips oder Anhydrit.

Keton-Aldehyd-Kondensations- bzw. Co-Kondensationsprodukte sind seit längerer Zeit bekannt. So werden beispielsweise in der DE-AS 23 41 923 gut wasserlösliche Kondensationsprodukte aus Cycloalkanonen und Formaldehyd unter Verwendung von Natriumsulfit als Säuregruppen einführender Stoff beschrieben. Ein gravierender Nachteil dieser Kondensationsprodukte ist jedoch deren geringe thermische Stabilität, wodurch deren Anwendungsbereich sehr stark eingeschränkt wird.

Eine gute Thermostabilität weisen die Säuregruppen enthaltende Kondensationsprodukte von Aldehyden und Ketonen entsprechend der DE-OS 31 44 673 bzw. Co-Kondensationsprodukte entsprechend der DE-OS 33 15 152 sowie die Metallverbindungen dieser (Co-)Kondensationsprodukte entsprechend der DE-OS 34 29 068 auf. Diese Produkte können zwar als Verdickungsmittel, Retentionsmittel, oberflächenaktive Mittel, Dispergiermittel oder Verflüssigungsmittel für wäßrige Systeme eingesetzt werden, doch sind die betreffenden Produkteigenschaften in manchen Anwendungsbereichen nicht optimal. So besitzen diese (Co-)Kondensationsprodukte nur geringe verzögernde Eigenschaften für Zement, Gips oder Anhydrit enthaltende Bindemittelsuspensionen.

Der vorliegenden Erfindung lag daher die Aufgabe zugrunde, die Keton-Aldehyd-Kondensations- bzw. Co-Kondensationsprodukte bzw. deren Metallverbindungen so zu modifizieren, daß die anwendungstechnischen Eigenschaften der entsprechenden Derivate weiter verbessert werden.

Diese Aufgabe wurde erfindungsgemäß durch die Verwendung von Pfropfpolymeren auf Basis von Keton-Aldehyd-Kondensationsprodukten und/oder Säuregruppen enthaltenden Co-Kondensationsprodukten und/oder ein- oder mehrwertige Metallverbindungen von Säuregruppen enthaltenden Keton-Aldeyhd-Kondensations- bzw. Co-Kondensationsprodukten gelöst, wobei das Kondensationsprodukt
a) aus symmetrischen oder unsymmetrischen Ketonen mit aliphatischen, araliphatischen, cyclischen oder aromatischen Kohlenwasserstoffresten mit mindestens einem nichtaromatischen Rest,
b) einem Aldehyd der Formel R-(CHO )ₙ, wobei n = 1 bis 2 und R = Wasserstoff, ein aliphatischer, araliphatischer, aromatischer oder heterocyclischer Rest sein kann, besteht,
an welches anionische und/oder nichtionische und/oder kationische ungesättigte Monomere gepfropft sind als Erstarrungsverzögerer für wäßrige Bindemittelsuspensionen auf der Basis von Zement, Gips oder Anhydrit.

Bevorzugte Anwendungsformen sind in den Unteransprüchen dargestellt.

Es hat sich nämlich überraschenderweise gezeigt, daß sich die Eigenschaften durch Aufpfropfung der betreffenden ungesättigten Monomere auf die (Co-)Kondensationsprodukte bzw. deren Metallverbindungen gezielt in der Weise beeinflussen lassen, daß sie auch verzögernde Eigenschaften aufweisen.

Die Grundkörper oder Pfropfgrundlage der erfindungsgemäß verwendeten Pfropfpolymere bestehen aus Keton-Aldehyd-Kondensationsprodukten und/oder Säuregruppen enthaltenden Co-Kondensationsprodukten und/oder ein- oder mehrwertige Metallverbindungen dieser Säuregruppen enthaltenden Keton-Aldehyd-Kondensations- bzw. Co-Kondensationsprodukte, wie sie beispielsweise in der DE-OS 31 44 673, der DE-OS 33 15 152 oder DE-OS 34 29 068 beschrieben sind. Als Ketone werden hierbei symmetrische oder unsymmetrische Verbindungen mit aliphatischen, araliphatischen, cyclischen oder aromatischen Kohlenwasserstoffresten mit mindestens einem nichtaromatischen Rest eingesetzt, wobei die Gesamtzahl der Kohlenstoff- und Heteroatome in den Ketonen vorzugsweise 3 bis 12 beträgt. Als aliphatische Reste kommen geradkettige oder verzweigte, ungesättigte und vorzugsweise gesättigte Alkylreste wie z. B. Methyl, Ethyl, Propyl, Isobutyl etc. in Betracht. Araliphatische Reste sind z. B. Benzyl oder Phenethyl und aromatische Reste z. B. α- oder β-Naphthyl und vorzugsweise Phenyl.

Die Ketone können auch einen oder mehrere Substituenten aufweisen, wie z. B. Amino-, Hydroxy-, Alkoxy-, Acetyl- oder Alkoxycarbonylgruppen. Beispiele für Ketone mit gesättigten aliphatischen Resten sind Aceton, Methylethylketon, Methylisobutylketon, für Ketone mit substituierten aliphatischen Resten Methoxyaceton, Diacetonalkohol, Acetessigsäureethylester, für Ketone mit ungesättigten aliphatischen Resten Methylvinylketon, Mesityloxid, Phoron, für Ketone mit araliphatischen Resten Benzylaceton, für Ketone mit cyclischen Resten Cyclohexanon und Cyclopentanon, für Ketone mit aromatischen Resten Acetophenon und 4-Methoxy-acetophenon.

Als Aldehyde der Formel R-(CHO)ₙ kommen solche Verbindungen in Frage, in denen n = 1 bis 2 und R =Wasserstoff, ein aliphatischer, araliphatischer, aromatischer oder heterocyclischer Rest ist und wobei die Gesamtzahl der Kohlenstoff- und Heteroatome vorzugsweise einen Wert von 1 bis 11 annimmt. Aliphatische Reste sind insbesondere Alkylreste, vorzugsweise mit 1 bis 6 Kohlenstoffatomen, wie z. B. Methyl, Ethyl, Propyl, Butyl etc. Die aliphatischen Reste können auch verzweigt oder ungesättigt sein (wie z. B. Vinyl). Aromatische Reste sind z. B. α- oder β-Naphthyl, Phenyl und heterocyclische Reste sind z. B. Furfuryl.

Die Aldehyde können auch einen oder mehrere Substituentena aufweisen, wie z. B. Amino-, Hydroxy-, Alkoxy- oder Alkoxycarbonyl-Gruppen und/oder auch die gegebenenfalls in den Kondensationsprodukten enthaltenen Säuregruppen. Es können auch Aldehyde mit mehr als einer Aldehydgruppe, nämlich insbesondere Dialdehyde eingesetzt werden. Es ist auch möglich, die niederen gesättigten Aldehyde wie Formaldehyd oder Acetaldehyd in ihrer polymeren Form (Paraformaldehyd oder Paraldehyd) zu verwenden. Beispiele für Aldehyde mit gesättigten aliphatischen Resten sind Formaldehyd (oder Paraformaldehyd), Acetaldehyd (oder Paraldehyd), Butyraldehyd. Beispiele für Aldehyde mit substituierten gesättigten aliphatischen Resten sind Methoxyacetaldehyd, 3-Methoxypropionaldehyd, Acetaldol. Beispiele für Aldehyde mit ungesättigten aliphatischen Resten sind Acrolein, Crotonaldehyd. Beispiele für Aldehyde mit araliphatischen Resten sind Phenylacetaldehyd und Phenylpropionaldehyd. Beispiele für Aldehyde mit aromatischen oder heterocyclischen Resten sind Benzaldehyd, Furfurol, 4-Methoxyfurfurol. Als Dialdehyde können beispielsweise Glyoxal oder Glutardialdehyd verwendet werden. Besonders bevorzugt als Aldehyd wird Formaldehyd eingesetzt.

Im Gegensatz zu den betreffenden Keton-Aldehyd-Kondensationsprodukten enthalten die Co-Kondensationsprodukte noch Säuregruppen, die vorzugsweise aus Carboxy-, Sulfo-, Sulfamido-, Sulfoxy-, Sulfoalkylamin- oder Sulfoalkyloxy-Gruppen bestehen. Eine Alkylgruppe in diesen Resten besitzt vorzugsweise 1 bis 5 Kohlenstoffatome und ist insbesondere Methyl oder Ethyl. Als Säuregruppen einführende Verbindungen werden vorzugsweise anorganische Säuren wie z. B. Amidosulfonsäure, oder deren Salze wie z. B. Natriumsulfit, Natriumbisulfit bzw. Natriumpyrosulfit, oder organische Säuren, insbesondere Carbonsäuren wie z.B. Aminoessigsäure verwendet. Die betreffenden Co-Kondensationsprodukte können auch zwei oder mehrere verschiedene Säuregruppen enthalten.

Das Molverhältnis von Ketonen zu Aldehyden kann in weiten Grenzen variiert werden und beträgt in der Regel 1 : 0,5 bis 18. Die Co-Kondensationsprodukte, die beispielsweise in der DE-OS 33 15 152 beschrieben sind, enthalten neben dem Keton, Aldehyd und der Säuregruppe mit einem bevorzugten Molverhältnis von 1 : 0,5 bis 18 : 0,1 bis 3 noch 2 bis 60 Gew.-%, vorzugsweise 10 bis 40 Gew.-%, einer weiteren Komponente, ausgewählt aus der Gruppe Aminoplastbildner und/oder ein Lignin und/oder Lignitderivat. Als Aminoplastbildner können hierbei alle üblichen, insbesondere die zur Kondensation mit Formaldehyd geeigneten stickstoffhaltigen Verbindungen, eingesetzt werden, insbesondere Harnstoff, Melamin, Dicyandiamid oder ein Guanamin (vorzugsweise Acetoguanamin oder Benzoguanamin).

Als aromatische Verbindungen sind vorzugsweise die zur Bildung von Phenolharzen geeigneten Phenole, also insbesondere Phenol, Cresole oder Xylenole einsetzbar, daneben aber auch reaktive substituierte und/oder mehrkernige Aromaten, wie z. B. Naphthalin und dessen Derivate. Die Aminoplastbildner oder aromatische Verbindungen können auch ganz oder teilweise in Form ihrer Vorkondensate oder Kondensationsprodukte verschiedenen Kondensationsgrades verwendet werden. Ebenso sind Aminoplastbildner und aromatische Verbindungen einsetzbar, die Säuregruppen enthalten, wie z. B. Naphthalinsulfonsäuren. Als Lignitverbindungen können reines Lignit, mit Alkali behandeltes Lignit und/oder sulfoniertes oder sulfoalkyliertes Lignit eingesetzt werden. Unter Ligninverbindungen im Rahmen der vorliegenden Erfindung sind auch Schwarzlaugen zu verstehen, die bei der Behandlung von Holz mit Natriumsulfit (Sulfitverfahren) gebildet werden, aber auch Ligninsulfonate bzw. deren Formaldehydharze. Die Lignine oder Lignite können auch in Form ihrer Metallverbindungen (insbesondere Eisen und Chrom) verwendet werden.

Anstelle der Säuregruppen enthaltenden Co-Kondensationsprodukte kann man auch die ein- oder mehrwertigen Metallverbindungen der Säuregruppen enthaltenden Keton-Aldehyd-Kondensations- bzw. Co-Kondensationsprodukte einsetzen, wie sie in der DE-OS 34 29 068 beschrieben sind. Als Metallverbindungen sind vorzugsweise solche mit Metallen der Gruppen II A bis VIII A und/oder der Gruppen I B bis V B (nach der Definition in Kirk-Othmer, Encyclopedia of Chemical Technology, Interscience Publishers New York-London-Sydney, 2. Ausgabe 1965, Vol. 8, Seiten 94 bis 96) geeignet, wobei insbesondere die ein- oder mehrwertigen anorganischen oder organischen Salze dieser Metalle Verwendung finden.

Beispiele für Metallverbindungen sind zwei- oder vierwertige Mangansalze, zweiwertige Nickelsalze, zwei- oder vierwertige Bleisalze, drei- oder sechswertige Chromverbindungen, zwei- oder dreiwertige Eisenverbindungen, dreiwertige Aluminiumverbindungen, ein- und zweiwertige Kupferverbindungen, zweiwertige Magnesiumverbindungen sowie dreiwertige Bismutverbindungen. Der Anteil an Metall in diesen Metallverbindungen liegt bei < 70 Gew.-%, vorzugsweise bei 0,1 bis 20 Gew.-%. Die Herstellung dieser Metallverbindungen wird in der DE-OS 34 29 068 beschrieben.

Es ist als erfindungswesentlich anzusehen, daß zur Verwendung als Erstarrungsverzögerer an diese betreffenden Keton-Aldehyd-Kondensationsprodukte bzw. Säuregruppen enthaltenden Co-Kondensationsprodukte bzw. den Metallverbindungen dieser Säuregruppen enthaltenden (Co-)Kondensationsprodukte anionische und/oder nichtionische und/oder kationische ungesättigte Monomere gepfropft worden sind.

Als anionische ungesättigte Monomere werden vorzugsweise Vinylverbindungen mit Carboxy-, Sulfo- oder Phosphorsäuregruppen verwendet. Beispiele für solche ungesättigten Verbindungen mit Carboxysäuregruppen sind Acrylsäure, Methacrylsäure, Maleinsäure, Fumarsäure, Itaconsäure bzw. deren Salze. Beispiele für Vinylverbindungen mit Sulfonsäuregruppen sind Vinylsulfonsäure, Allylsulfonsäure, Methallylsulfonsäure, AMPS, Styrolsulfonsäure und deren Salze. Beispiele für Vinylverbindungen mit Phosphorsäuregruppen sind Vinylphosphonsäure, 2-Acrylamido-2-methylpropanphosphonsäure, Methacryloxyethylphosphat.

An die Stelle der anionischen ungesättigten Monomerverbindungen können auch nichtionische Monomere treten, wobei Vinyl- oder Acrylderivate als bevorzugt anzusehen sind. Hierbei finden vor allem N-Vinylpyrrolidon, Acrylamid, Methacrylamid, N,N-Dimethylacrylamid, Acrolein, Mesityloxid, Allylalkohol, Acrylnitril, Vinylacetat sowie Styrol Anwendung. Weitere Beispiele für solche ungesättigte Verbindungen sind die Ester der oben genannten ungesättigten Säuren.

Schließlich ist es auch möglich, für die Pfropfung kationische ungesättigte Monomere einzusetzen, welche vorzugsweise quaternäre Ammoniumverbindungen darstellen. Beispiele für solche quaternäre Ammoniumverbindungen sind Methacroyloxyethyltrimethylammoniumchlorid (METAC), (Meth-)Acrylamidopropyltrimethylammoniumchlorid (MAPTAC), Trimethylallyloxyethylammoniumchlorid (TAAC), Dimethyldiallylammoniumchlorid (DMDAAC).

Das Gewichtsverhältnis von Keton-Aldehyd-Kondensations- bzw. Co-Kondensationsprodukt zu ungesättigtem Monomer kann in weiten Grenzen variiert werden, doch hat es sich als besonders vorteilhaft erwiesen, dieses Verhältnis auf 1 : 0,02 bis 1 : 10 einzustellen. Die Durchführung der Pfropfreaktion ist relativ unkritisch und kann nach den üblichen bekannten Methoden durchgeführt werden. Vorzugsweise wird die Pfropfreaktion in wäßriger Lösung bei einer Temperatur von O bis 100°C sowie einem pH-Wert von 1 bis 13 durchgeführt, wobei auf die üblichen radikalischen Starter auf Basis von Redoxsystemen wie z.B. H₂O₂ und Eisen-(II)-salze (wie z. B. Eisen-(II)-sulfat-heptahydrat), Peroxodisulfat/Pyrosulfit oder Sulfit, Cer-(IV)-salze oder auf thermische Starter wie AIBN oder organische bzw. anorganische Peroxide zurückgegriffen wird.

Nach der Durchführung der Pfropfreaktion, die in der Regel nach wenigen Stunden beendet ist, wird vorzugsweise mit den üblichen Basen oder Säuren die Reaktionslösung neutral gestellt. Die dabei entstehende Pfropfpolymerisatlösung weist üblicherweise einen Feststoffgehalt zwischen 5 und 50 Gew.-% auf.

Die erfindungsgemäß eingesetzten Pfropfpolymere bzw. deren Herstellung sind aus der deutschen Patentanmeldung P 43 22 112.2 bekannt. Diese Pfropfpolymere mit einem Molgewicht von 500 bis 2 Mio. und je nach Feststoffgehalt mit einer Viskosität von vorzugsweise 10 bis 5 000 mPas weisen überraschenderweise gute verzögernde Eigenschaften beim Aushärten von Zement, Gips oder Anhydrit enthaltenden Bindemittelsuspensionen auf. Sie verlängern in hervorragender Weise die Verarbeitbarkeit beispielsweise von Beton, Mörtel, Zementschlämmen (beispielsweise auch bei der Bohrlochzementation), Gips- und Anhydritschlämmen, wobei diese Pfropfpolymere aufgrund ihrer guten Thermostabilität ihre Wirkung auch bei vergleichsweise hohen Temperaturen nicht verlieren. Die entsprechenden Pfropfpolymere werden hierbei insbesondere in einer Menge von 0,01 bis 5,0 Gew.-%, vorzugsweise 0,3 bis 1,0 Gew.-%, bezogen auf das Gewicht des jeweiligen Bindemittels eingesetzt, um die gewünschte Erstarrungsverzögerung zu erzielen.

Die nachfolgenden Beispiele sollen die Erfindung näher veranschaulichen. In Tabelle 1 wird ein Überblick über die in den Herstellungsbeispielen verwendeten Ausgangsprodukte gegeben.

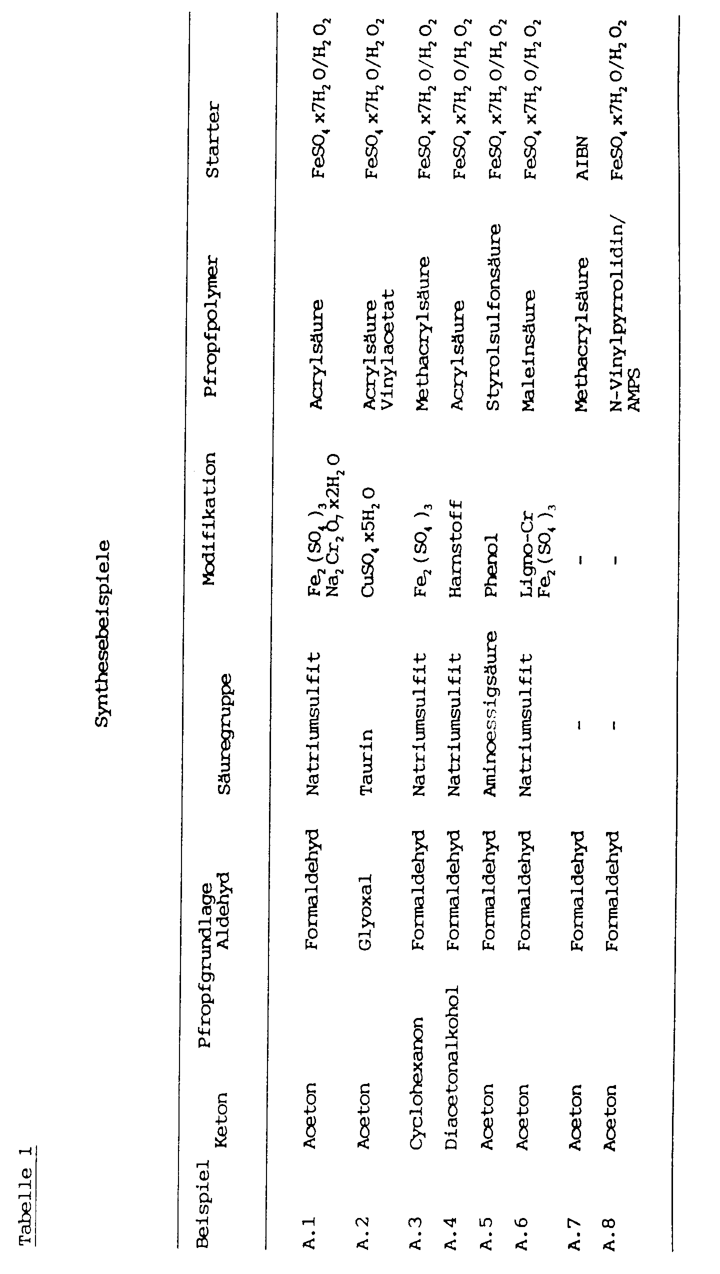

### A. Synthesebeispiele

### Beispiel A.1

In einem Rührbehälter mit Innenthermometer und Rückflußkühler werden in der vorgegebenen Reihenfolge
129,1 Gew.-Teile Wasser,
54,2 Gew.-Teile Natriumsulfit und
39,9 Gew.-Teile Aceton vorgelegt und auf 56°C erwärmt.

Sobald der Acetonrückfluß einsetzt, werden insgesamt 258,2 Gew.-Teile 30 %ige Formaldehydlösung innerhalb 10 Minuten zugetropft. Wegen der stark exothermen Reaktion wird das erste Zehntel der Formalinlösung langsam und gleichmäßig zugegeben. Nach Anspringen der Reaktion, das sich durch beginnende Gelbfärbung der Vorlage und verstärktem Acetonrückfluß äußert, wird das restliche Formalin zugegeben, wobei man die Temperatur des Ansatzes zum Siedepunkt ansteigen läßt. Im Anschluß an die Formaldehydzugabe führt man noch eine 30 Minuten dauernde thermische Nachbehandlung des tiefroten Ansatzes bei 95°C durch. Nach dem Abkühlen auf Raumtemperatur wird der pH-Wert mit 42,4 Gew.-Teilen 96 %iger Essigsäure von 9,8 auf 4 eingestellt.

Zu der Harzlösung werden 68,6 Gew.-Teile einer 40 %igen wäßrigen Eisen(III)sulfat-Lösung gegeben und der Ansatz 2 Stunden bei Raumtemperatur gerührt. Zur Darstellung der Eisen-Chrom-Verbindung setzt man der braunen Lösung der Eisenverbindung 50,0 Gew.-Teile einer 45 %igen wäßrigen Lösung von Natriumdichromat-Dihydrat zu und rührt erneut 2 Stunden bei Raumtemperatur. Der pH-Wert wird mit 27,3 Gew.-Teilen 50 %iger H₂SO₄ von 3,5 auf 2,0 gestellt. Der Feststoffgehalt der niedrigviskosen Lösung beträgt 29 Gew.-%.

Die braune Lösung wird auf 60°C erwärmt und Luft aus dem Rührbehälter durch einen 30 minütigen Stickstoffstrom verdrängt. Im 30 Minutenabstand werden
37,5 Gew.-Teile Eisen(II)sulfat Heptahydrat,
193,0 Gew.-Teile Acrylsäure zugegeben und
15,3 Gew.-Teile 30 %ige Wasserstoffperoxidlösung
mittels einer Schlauchpumpe gleichmäßig in 2 Minuten zudosiert. Dabei steigt die Temperatur auf 90°C an, die Lösung wird hochviskos. Die braune Reaktionslösung wird 2 Stunden bei 60°C gerührt, mit 200 Gew.-Teilen Wasser verdünnt und nach dem Abkühlen auf Raumtemperatur mit ca. 383 Gew.-Teilen 35 %iger Natronlauge neutralisiert. Das Pfropfpolymerisat weist einen Feststoffgehalt von 30 Gew.-% und eine Viskosität von 146 mPas auf.

### Beispiel A.2

In einem Rührbehälter mit Innenthermometer und Rückflußkühler werden in der vorgegebenen Reihenfolge
166,7 Gew.-Teile Wasser,
52,1 Gew.-Teile Taurin,
16,7 Gew.-Teile Natriumhydroxid fest sowie
48,3 Gew.-Teile Aceton
vorgelegt und auf 56°C erwärmt. Sobald die Temperatur erreicht ist, gibt man aus dem Vorratsgefäß insgesamt 250 Gew.-Teile einer 30 %igen wäßrigen Glyoxal-Lösung innerhalb 10 Minuten zu, wobei die Temperatur auf 65°C ansteigt. Im Anschluß an die Aldehyd-Zugabe wird noch 6 Stunden bei 70°C gerührt. Zur überführung in eine Metallverbindung versetzt man die braune heiße Harzlösung mit 30,6 Gew.-Teilen einer 60 %igen Lösung von Kupfer(II)sulfat-Pentahydrat und rührt 2 Stunden bei 85°C.

Die abgekühlte Lösung besitzt einen Feststoffgehalt von 22 Gew.-% und einen pH-Wert von 2,1. Die Lösung wird auf 60°C erwärmt und Luft aus dem Rührbehälter durch einen 30 minütigen Stickstoffstrom verdrängt.

Im 30 Minutenabstand werden
19,2 Gew.-Teile Eisen(II)sulfat Heptahydrat,
30,4 Gew.-Teile Acrylsäure + 36,2 Gew.-Teile Vinylacetat zugegeben und
7,96 Gew.-Teile 30 %ige Wasserstoffperoxidlösung mittels einer Schlauchpumpe gleichmäßig innerhalb 2 Minuten zudosiert.

Danach wird die braune Reaktionslösung noch 2 Stunden bei 60°C gerührt und nach dem Abkühlen auf Raumtemperatur mit ca. 108 Gew.-Teilen 35 %iger Natronlauge auf neutral gestellt.

Die Lösung weist einen Feststoffgehalt von 27 Gew.-% und eine Brookfield-Viskosität von 10 mPas auf.

### Beispiel A.3

In einem Rührbehälter mit Innenthermometer und Rückflußkühler werden in der vorgegebenen Reihenfolge nacheinander
116,6 Gew.-Teile Wasser,
62,4 Gew.-Teile Natriumsulfit sowie
10,7 Gew.-Teile Cyclohexanon
vorgelegt und diese Suspension auf 90°C erwärmt.

Anschließend läßt man aus dem Vorratsgefäß insgesamt 275,1 Gew.-Teile Formaldehydlösung (30 %ig) langsam in die Vorlage einfließen, wobei die Temperatur der Reaktionslösung auf 100°C ansteigen darf. Im Anschluß an die Formalinzugabe führt man noch eine 10 Minuten dauernde thermische Nachbehandlung des Ansatzes bei 95 100°C durch.

Die so erhaltene rotbraune Harzlösung wird mit 88,3 Gew.-Teilen einer 40 %igen wäßrigen Eisen(III)sulfat-Lösung versetzt. Nach 2 Stunden Rühren bei 95°C ist die Bildung der Metallverbindung beendet. Der Ansatz wird auf 60°C abgekühlt und mit 17,2 Gew.-Teilen 50 %iger Schwefelsäure von pH 3,3 auf pH 2 eingestellt. Anschließend wird die Luft aus dem Rührbehälter durch einen 30 minütigen Stickstoffstrom verdrängt.

Im 30 Minutenabstand werden
70 Gew.-Teile Eisen(II)sulfat Heptahydrat,
150 Gew.-Teile Methacrylsäure zugegeben und
57 Gew.-Teile 30 %ige Wasserstoffperoxidlösung mittels einer Schlauchpumpe gleichmäßig innerhalb 5 Minuten zudosiert.

Danach wird die rotbraune Reaktionslösung noch 3 Stunden bei 60°C nachgerührt und nach dem Abkühlen auf Raumtemperatur mit 193,5 Gew.-Teilen 35 %iger Natronlauge von pH 1,0 auf neutral gestellt.

Die braune niedrigviskose Polymerisatlösung weist einen Feststoffgehalt von 34 Gew.-% und eine Brookfield-Viskosität von 15 mPas auf.

### Beispiel A.4

In einem Rührbehälter mit Innenthermometer und Rückflußkühler werden in der vorgegebenen Reihenfolge
119,2 Gew.-Teile Wasser,
20,0 Gew.-Teile Natriumsulfit,
7,2 Gew.-Teile Harnstoff sowie
34,6 Gew.-Teile Diacetonalkohol
vorgelegt und auf 60°C erwärmt.

Zu dieser gelblichen, klaren Vorlage läßt man gleichmäßig 119,1 Gew.-Teile 30 %igen Formaldehyd in 10 Minuten so zutropfen, daß die Temperatur auf 90°C ansteigt. Es wird bei 90°C 2 Stunden gerührt und bei Bedarf mit Wasser verdünnt. Die tiefrote Lösung weist einen Feststoffgehalt von 10 Gew.-% und eine Viskosität von 180 mPas auf.

Nach dem Abkühlen auf Raumtemperatur wird die Lösung mit ca. 23 Gew.-Teilen 50 %iger Schwefelsäure von pH 12,7 auf pH 2 gestellt und auf 60°C erwärmt. Luft wird aus dem Rührbehälter durch einen 30 minütigen Stickstoffstrom verdrängt.

Im 30 Minutenabstand werden
32,0 Gew.-Teile Eisen(II)sulfat Heptahydrat,
200,0 Gew.-Teile Wasser,
72,0 Gew.-Teile Acrylsäure zugegeben und
15,2 Gew.-Teile 30 %ige Wasserstoffperoxidlösung mittels einer Schlauchpumpe gleichmäßig innerhalb 1 Minute zudosiert.

Danach wird die Reaktionslösung noch 2 Stunden bei 60°C gerührt und nach dem Abkühlen auf Raumtemperatur mit ca. 131 Gew.-Teilen 35 %iger Natronlauge auf neutral gestellt. Das hochviskose braune Gel weist einen Feststoffgehalt von 18 Gew.-% und eine Viskosität von 1 800 mPas auf.

### Beispiel A.5

In einem Rührbehälter mit Innenthermometer und Rückflußkühler werden in der vorgegebenen Reihenfolge
161,3 Gew.-Teile Wasser,
36,9 Gew.-Teile festes Natriumhydroxid,

34,6 Gew.-Teile Aminoessigsäure,
43,4 Gew.-Teile Phenol sowie
26,8 Gew.-Teile Aceton
vorgelegt und bis zum Eintreten von Acetonrückfluß erhitzt.

Zu dieser farblosen, klaren Vorlage läßt man aus einem Vorratsgefäß insgesamt 138,3 Gew.-Teile 30 %ige Formaldehydlösung in 5 Minuten einfließen, wobei die Temperatur bis zum Ende des Formalineintrags auf 95°C ansteigen soll. Im Anschluß an den Formalineintrag wird die gelbe, klare Lösung noch 1 Stunde bei 95°C gehalten und nach dem Abkühlen auf Raumtemperatur mit ca. 110 Gew.-Teilen 50 %iger Schwefelsäure von pH 12 auf pH 2 eingestellt. Die orange-rote Reaktionslösung (Feststoffgehalt: 30 Gew.-%, Viskosität: 1O mPas) wird auf 60°C erwärmt und Luft wird aus dem Rührbehälter durch einen 30 minütigen stetigen Stickstoffstrom verdrängt.

Im 30 Minutenabstand werden
26,0 Gew.-Teile Eisen(II)sulfat Heptahydrat,
60,0 Gew.-Teile Styrolsulfonsäure (Aldrich) zugegeben und nach weiteren 30 Minuten
11,0 Gew.-Teile 30 %ige Wasserstoffperoxidlösung mittels einer Schlauchpumpe innerhalb 1 Minute zudosiert.

Danach wird die dunkelbraune Reaktionslösung noch 2 Stunden bei 60°C gerührt und nach dem Abkühlen auf Raumtemperatur mit ca. 110 Gew.-Teilen 35 %iger Natronlauge auf neutral gestellt.

Die dunkelbraune niedrigviskose Pfropfpolymerisatlösung weist einen Feststoffgehalt von 34 Gew.-% und eine Visokität von 18 mPas auf.

### Beispiel A.6

In einem Rührbehälter mit Innenthermometer und Rückflußkühler werden in der vorgegebenen Reihenfolge
39,8 Gew.-Teile Wasser,
17,4 Gew.-Teile Natriumsulfit sowie
15,2 Gew.-Teile Aceton
vorgelegt und die Suspension auf 56°C erhitzt.

Sobald der Acetonrückfluß einsetzt, werden insgesamt 82,9 Gew.-Teile 30 %ige Formaldehydlösung in 10 Minuten zugetropft. Im Anschluß an die Formaldehydzugabe führt man noch eine 30 Minuten dauernde thermische Nachbehandlung des tiefroten Ansatzes bei 95°C durch. Zu dieser 95°C heißen Harzlösung setzt man 26,1 Gew -Teile einer 40 %igen Eisen(III)sulfat-Lösung zu und erhitzt weitere 2 Stunden zum Sieden. Die erhaltene Lösung an Metallverbindung weist einen Feststoffgehalt von 27 Gew.-% auf. Ihre Brookfield-Viskosität nach dem Abkühlen auf Raumtemperatur beträgt 15 mPas.

Die Reaktionslösung wird auf 90°C erwärmt und mit 181 Gew.-Teilen 40 %iger, 95°C heißer wäßriger Ligno-Cr-Lösung, 13,7 Gew.-Teilen Salicylsäure sowie 13,7 Gew.-Teilen Paraformaldehyd versetzt. Das Reaktionsgemisch wird 6 Stunden bei 95°C gerührt. Die Lösung hat einen Feststoffgehalt von 34 Gew.-% und eine Viskosität von 50 mPas.

Der pH-Wert der Lösung wird mit 1O Gew.-Teilen H₂SO₄ 50 %ig von 3,7 auf 2 gestellt. Die rotbraune Lösung wird auf 60°C erwärmt und die Luft aus dem Rührbehälter durch einen 30 minütigen Stickstoffstrom aus dem Rührbehälter verdrängt.

Zu der Vorlage werden im 30 Minutenabstand
55 Gew.-Teile Eisen(II)sulfat Heptahydrat,
117 Gew.-Teile Maleinsäure zugegeben und
45 Gew.-Teile 30 %ige Wasserstoffperoxidlösung mittels einer Schlauchpumpe gleichmäßig innerhalb 8 Minuten zudosiert.

Danach wird die Reaktionslösung noch 3 Stunden bei 60°C gerührt und nach dem Abkühlen auf Raumtemperatur mit 288 Gew.-Teilen 35 %iger Natronlauge von pH 1,O auf neutral gestellt. Die Lösung besitzt bei einem Feststoffgehalt von 34 Gew.-% eine Viskosität von 19 mPas.

### Beispiel A.7

Ein Aldolkondensat ohne Säurefunktion wird analog Vorschrift nach Houben-Weyl, Band 14/II 1963, S. 422 Beispiel 3(a) dargestellt.

In einem Becherglas werden in der vorgegebenen Reihenfolge
696 Gew.-Teile Aceton,
2178 Gew.-Teile 30 %ige Formaldehydlösung,
20 Gew.-Teile Kaliumcarbonat gelöst in
35 Gew.-Teile Wasser
vorgelegt.

Die klare Lösung erwärmt sich innerhalb 45 Minuten bis zum Sieden. Man läßt sie 26 Stunden stehen und neutralisiert dann mit ca. 5 Gew.-Teilen konzentrierter Salzsäure. Die farblose Lösung wird anschließend am Rotationsverdampfer von 17 Gew.-% Feststoffgehalt auf ca. 40 Gew.-% eingeengt, um nicht umgesetztes Aceton und Formaldehyd zu entfernen. Die so erhaltene voll wasserlösliche Harzlösung ist farblos und weist eine Brookfield-Viskosität von 70 mPas bei einem Feststoffgehalt von 42,4 Gew.-% auf.

In einem Rührbehälter mit Innenthermometer und Rückflußkühler werden 500 Gew.-Teile 20 %ige Aldolkondensat-Lösung, die nach obiger Vorschrift hergestellt wurde, vorgelegt, mit 0,6 Gew.-Teilen 50 %iger Schwefelsäure von pH 8,6 auf 7 eingestellt, auf 80°C erwärmt und durch einen 30 minütigen stetigen Stickstoffstrom die Luft aus dem Rührbehälter verdrängt.

Zu der Vorlage wird eine Lösung bestehend aus
2,9 Gew.-Teile 2,2-Azobis-(2-methyl-propionsäurenitril) (AIBN) und
100,0 Gew.-Teile Methacrylsäure
   innerhalb 20 Minuten zugepumpt.

Die gelbliche Lösung wird 3 Stunden bei 80°C gerührt und bei Bedarf mit Wasser verdünnt.

Die gelbliche, hochviskose Polymerlösung weist einen Feststoffgehalt von 34 Gew.-% und eine Viskosität von 2 000 mPas auf.

### Beispiel A.8

Ein Aldolkondensat ohne Säurefunktion wird analog Vorschrift nach Houben-Weyl, Band 14/II 1963, S. 422, Beispiel 3(a) dargestellt.

In einem Becherglas werden in der vorgegebenen Reihenfolge
696 Gew.-Teile Aceton,
2178 Gew.-Teile 30 %ige Formaldehydlösung,
20 Gew.-Teile Kaliumcarbonat gelöst in
35 Gew.-Teile Wasser
vorgelegt.

Die klare Lösung erwärmt sich innerhalb 45 Minuten bis zum Sieden. Man läßt sie 26 Stunden stehen und neutralisiert dann mit 5 Gew.-Teilen konzentrierter Salzsäure. Die farblose Lösung wird anschließend am Rotationsverdampfer von 17 Gew.-% Feststoffgehalt auf ca. 40 Gew.-% eingeengt. Die so erhaltene voll wasserlösliche Harzlösung ist farblos und weist eine Brookfield-Viskosität von 70 mPas bei einem Feststoffgehalt von 42,0 Gew.-% auf.

In einem Rührbehälter mit Innenthermometer und Rückflußkühler werden 500 Gew.-Teile 20 %ige Aldolkondensat-Lösung, die nach obiger Vorschrift hergestellt wurde, vorgelegt, auf 60 °C erwärmt und durch einen 30 minütigen stetigen Stickstoffstrom die Luft aus dem Rührbehälter verdrängt. Zu dieser Vorlage werden 120 g Na-AMPS (Lubrizol 2405) und 30 g N-Vinylpyrrolidon zugegeben und 2 Minuten eingerührt. Anschließend werden 2,5 g Wasserstoffperoxid 30 %ig zugegeben, nach kurzem Einrühren (ca. 1 Minute) wird die Reaktion durch Zugabe von 6,15 g Eisen(II)sulfat Heptahydrat gestartet und 2 Stunden bei 60 °C nachgerührt.

Die braune Reaktionslösung wird mit 32,4 Gew.-Teilen 5 %iger Natronlauge von pH 3,8 auf neutral eingestellt. Die Lösung besitzt bei einem Feststoffgehalt von 19,3 Gew.-% eine Brookfield-Viskosität von 120 mPas.

### B. Anwendungsbeispiele

### B.1 Verzögerung des Erstarrens von Zementleimen mit Normsteife (DIN 1164)

### Rezeptur

500 g Portland Zement PZ35F
100 - 125 g Wasser
2,5 g Zusatzmittel (0,5 Gew.-% bezogen auf Zementgehalt)

### Durchführung

Nach DIN 1164 wird ein Wasser-Zement-Gemisch bereitet, das über eine exakt definierte Normsteife verfügt. Dazu wird eine wäßrige Lösung des Zusatzmittels und ca. 100 bis 125 g Wasser in einem Mischer vorgelegt und 500 g Zement dazu gegeben. Die Mischung wird 3 Minuten gemischt und anschließend in einen Hartgummiring gegossen. 5 Minuten nach Mischbeginn wird die Steife mit einem Vicatgerät, das mit dem Tauchstab versehen ist, ermittelt.

Der Zement hat Normsteife, wenn der Tauchstab 30 Sekunden nach dem Loslassen 5 bis 7 mm über der Basalfläche des Hartgummirings ist. Die vorgelegte Wassermenge ist so lange zu variieren, bis die Normsteife erreicht ist. Hat der Zementleim Normsteife, dann wird die Probe sogleich mit dem Hartgummiring in einen Kasten mit feuchtigkeitsgesättigter Luft gegeben.

Zur Bestimmung des Erstarrungsbeginns wird der Tauchstab gegen eine Nadel mit genau definierten Dimensionen ersetzt und die Steife des Zements in 10-Minuten-Intervallen vermessen. Als Erstarrungsbeginn gilt der Zeitpunkt, bei dem die Nadel 3 bis 5 mm über der Basalfläche stecken bleibt.

Zur Bestimmung des Erstarrungsendes wird nach Ermittlung des Erstarrungsbeginns der Hartgummiring samt Zementleimkegel auf den Kopf gestellt und das Eindringen der Nadel in die vorherige Basalfläche in 10-Minuten-Abständen vermessen. Das Erstarrungsende ist definiert als der Zeitpunkt, bei dem die Nadel noch höchstens 1 mm in den erstarrten Zementleim eindringt.

### Ergebnisse

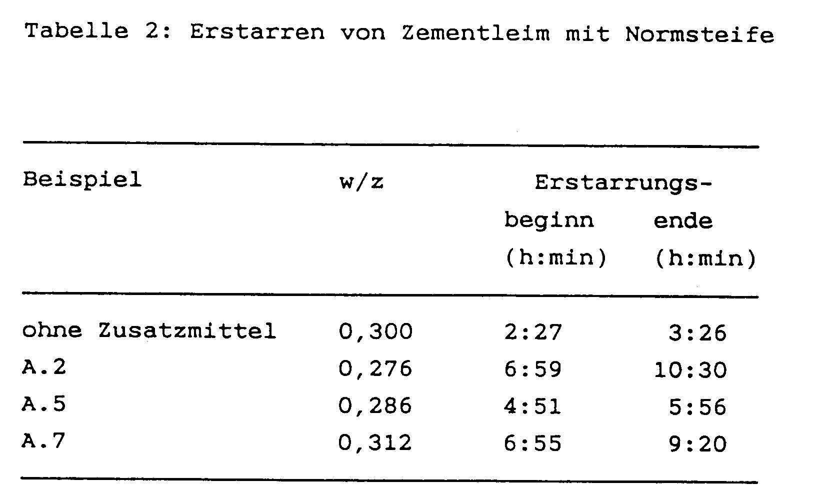

### B.2 Verzögerung des Erstarrungsbeginns von Gips mit dem Tauchkonus nach DIN 1168

### Rezeptur

700 g alpha-CaSO₄ x 1/2H₂O
140 bis 200 g Wasser
3,5 g Zusatzmittel (0,5 Gew.-% bezogen auf Gipsgehalt)

### Durchführung

Nach DIN 1168 wird ein Wasser-Gips-Gemisch bereitet, das ein Ausbreitmaß von 16 bis 17 cm aufweist. Dazu werden 140 bis 200 g Wasser und die wäßrige Lösung des Zusatzmittels mit 700 g alpha-Gips x 1/2 H₂O versetzt. Nach einer Anquellzeit von 1 Minute wird die Gipsmischung 3 Minuten mit dem Mischer gemischt und sofort anschließend das Ausbreitmaß ermittelt. Die vorgelegte Wassermenge ist so lange zu variieren, bis sich ein Ausbreitmaß von 16 bis 17 cm einstellt.

Zur Bestimmung des Erstarrungsbeginns wird eine Mischung mit richtigem Ausbreitmaß angemischt und sofort nach der Anmischung erfolgt die Vermessung mit einem Vicatgerät mit Tauchkonus. Als Versteifungsbeginn wird die Dauer in Minuten angegeben, nach der der Tauchkonus bei 18 +/- 2 mm über der Basalfläche des Gipskegels stecken bleibt. Die Dauer wird von Beginn des Einstreuens des Baugipses an gerechnet.

### Ergebnisse

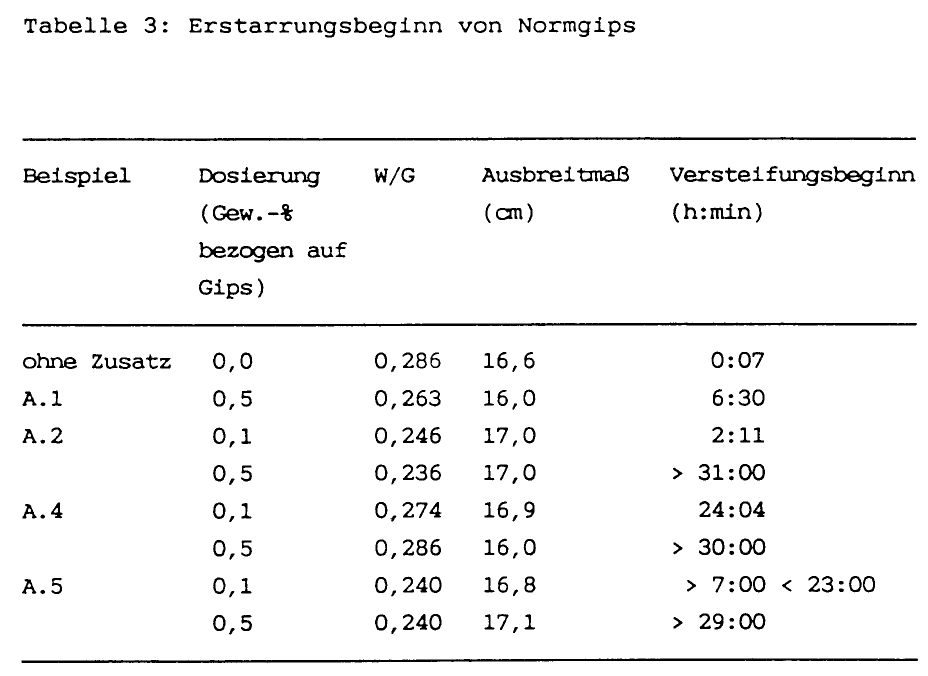

### B.3 Verzögerung des Erstarrens von Bohrlochzementen

### B.3.1 Test am atmosphärischen Konsistometer

### Rezeptur

792 g Dyckerhoff Class G Zement
77 g NaCl
349 g Wasser
3,96 g Zusatzmittel (0,5 Gew.-% bezogen auf Zementgehalt)

### Durchführung

Wasser und Zusatzmittel werden als Lösung vorgelegt und dann am Waring Blendor mit dem Zement und NaCl verrührt. Die Zementschlämme wird in eine Zelle des atmosphärischen Konsistometers gegeben und die Versteifungszeit bei 190 °F bestimmt. Durch das Ansteifen der Zementschlämme wird eine stetig ansteigende Viskositätskurve aufgezeichnet. Als Versteifungszeit ist dasjenige Zeitintervall definiert, das zwischen Meßbeginn und Erreichung eines Drehmoments von 70 Bc vergangen ist.

### Ergebnisse

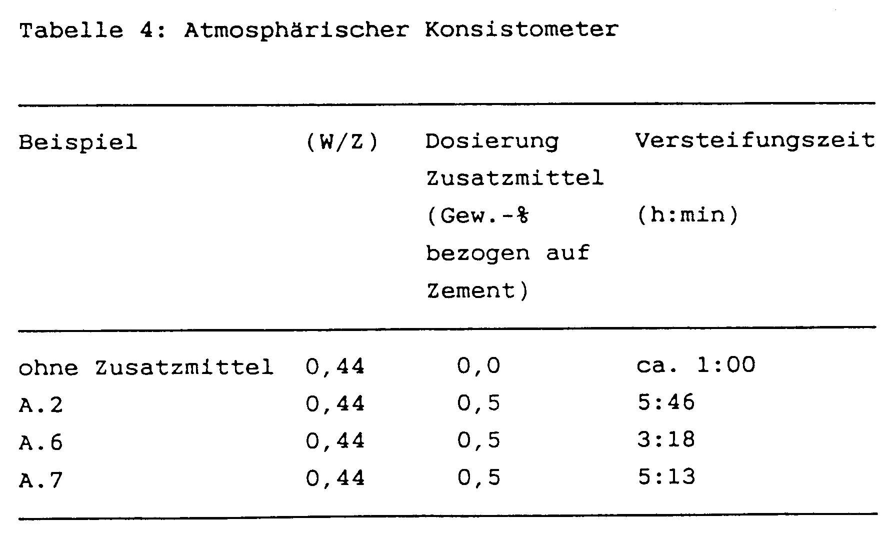

### B.3.2 Test am HTHP-Konsistometer

### Rezeptur

860 g Lone Star Class H Zement
327 g Wasser
4,3 g Zusatzmittel (0,5 Gew.-% bezogen auf Zementgehalt)

### Durchführung

Wasser und Zusatzmittel werden in einem Waring-Mischbecher vorgelegt und der Zement am Waring Blendor eingerührt. Die Zementschlämme wird in die HTHP-Meßzelle gegeben und die Versteifungszeit nach dem Meßprogramm 6 g gemäß der API-Spezifikation 10 (Ausgabe 1991) vermessen.

### Ergebnisse

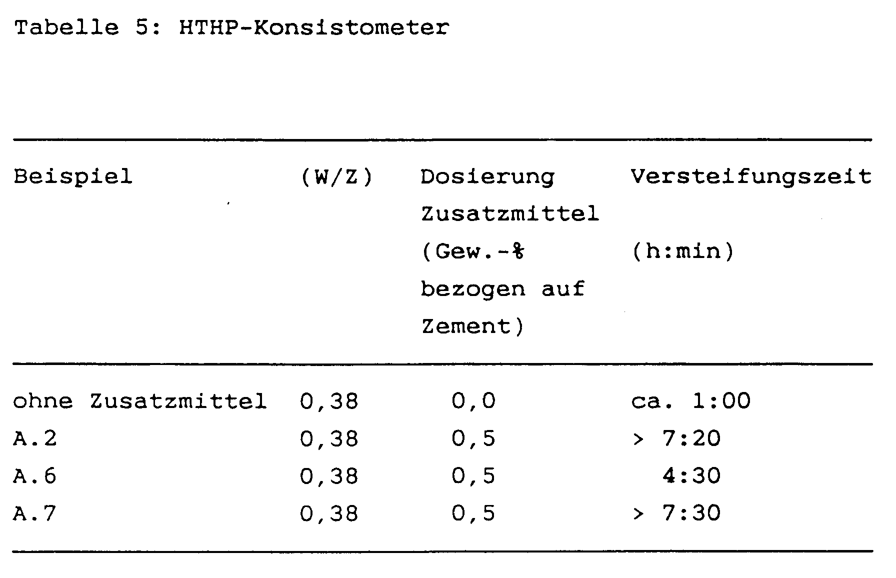

### B.4 Verzögerung der Druckfestigkeitsentwicklung von Beton

### Rezeptur

6,3 bis 6,4 kg Zement Kiefersfelden PZ 35 F
W/Z = 0,48
17,2 kg Sand 0/4 mm
2,8 kg Kies 4/8 mm
8,5 kg Kies 8/16 mm
11,5 kg Kies 16/32 mm

### Betonherstellung

Die Zuschläge (Sand, Kies) und der Zement werden in einem 30 l Zyklos-Zwangsmischer 1 Minute vorgemischt, mit Wasser versetzt und für eine weitere Minute vermischt. Anschließend wird der Zementverzögerer (A.2, A.7) zugegeben und nochmals 1 Minute gemischt. Die Wassermenge unter Berücksichtigung des Wassergehaltes des Zementverzögerers (wäßrige Lösungen) wird so gewählt, daß für alle Betonmischungen ein W/Z-Verhältnis von 0,48 erhalten wird.

Die Betonmischungen werden dann mit einem Wicker-Rütteltisch RTL mit 9 000 Schwingungen pro Minute gerüttelt und abschließend wurden würfelförmige Probekörper mit 15 cm Kantenlänge gegossen. Die Probekörper werden bei 20 °C und 65 % relativer Luftfeuchte gelagert und nach verschiedenen Zeitabständen auf Druckfestigkeit getestet.

### Ergebnisse

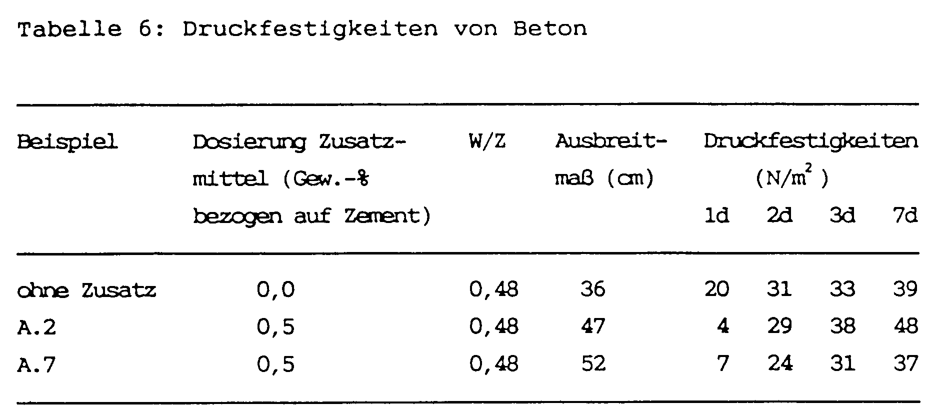

## Patentansprüche

1. Verwendung von Pfropfpolymeren von Keton-Aldehyd-Kondensationsprodukten und/oder Säuregruppen enthaltenden Keton-Aldehyd-Co-Kondensationsprodukten und/oder ein- oder mehrwertigen Metallverbindungen von Säuregruppen enthaltenden Keton-Aldehyd- Kondensationsprodukten bzw. Co-Kondensationsprodukten, wobei das Kondensationsprodukt
a) aus symmetrischen oder unsymmetrischen Ketonen mit aliphatischen, araliphatischen, cyclischen oder aromatischen Kohlenwasserstoffresten mit mindestens einem nichtaromatischen Rest,
b) einem Aldehyd der Formel R-(CHO)ₙ, wobei n = 1 bis 2 und R = Wasserstoff, ein aliphatischer, araliphatischer, aromatischer oder heterocyclischer Rest sein kann, besteht,
an welches anionische und/oder nichtionische und/oder kationische ungesättigte Monomere gepfropft sind als Erstarrungsverzögerer für wäßrige Bindemittelsuspensionen auf der Basis von Zement, Gips oder Anhydrit.

2. Verwendung nach Anspruch 1,
dadurch gekennzeichnet,
daß die Gesamtzahl der Kohlenstoff- und Heteroatome in den Ketonen 3 bis 12 beträgt.

3. Verwendung nach Anspruch 1,
dadurch gekennzeichnet,
daß die Gesamtzahl der Kohlenstoff- und Heteroatome in den Aldehyden einen Wert von 1 bis 11 aufweist.

4. Verwendung nach den Ansprüchen 1 bis 3,
dadurch gekennzeichnet,
daß das Molverhältnis Keton : Aldehyd 1 : 0,5 bis 1 : 18 beträgt.

5. Verwendung nach den Ansprüchen 1 bis 4,
dadurch gekennzeichnet,
daß die Co-Kondensationskomponenten zu den Säuregruppen enthaltenden Keton-Aldehyd-Kondensationsprodukten Aminoplastbildner und/oder aromatische Verbindungen bzw. deren Kondensationsprodukte sind.

6. Verwendung nach Anspruch 5,
dadurch gekennzeichnet,
daß der Aminoplastbildner aus Harnstoff, Melamin, Dicyandiamid oder einem Guanamin besteht.

7. Verwendung nach Anspruch 5,
dadurch gekennzeichnet,
daß die aromatische Verbindung ein Phenolderivat ist.

8. Verwendung nach Anspruch 5,
dadurch gekennzeichnet,
daß die aromatische Verbindung ein Naphthalinderivat ist.

9. Verwendung nach den Ansprüchen 1 bis 4,
dadurch gekennzeichnet,
daß die Co-Kondensationskomponente zu den Säuregruppen enthaltenden Keton-Aldehyd-Kondensationsprodukten aus einem Lignin- und/oder Lignit-Derivat besteht.

10. Verwendung nach den Ansprüchen 1 bis 9,
dadurch gekennzeichnet,
daß die Säuregruppen für die Keton-Aldehyd-Kondensations- bzw. Co-Kondensationsprodukte aus Carboxy-, Sulfo-, Sulfamido-, Sulfoxy-, Sulfoalkylamin oder Sulfoalkyloxy-Gruppen bestehen.

11. Verwendung nach den Ansprüchen 1 bis 10,
dadurch gekennzeichnet,
daß das Molverhältnis Keton : Säuregruppen in den Säuregruppen enthaltenden Keton-Aldehyd-Kondensations- bzw. Co-Kondensationsprodukten 1 : 0,1 bis 1 : 3 beträgt.

12. Verwendung nach den Ansprüchen 1 bis 11,
dadurch gekennzeichnet,
daß die Metallverbindungen der Säuregruppen enthaltenden Kondensations- bzw. Co-Kondensationsprodukte Metalle der Gruppe II A bis VIII A und/oder der Gruppe I B bis V B enthalten.

13. Verwendung nach den Ansprüchen 1 bis 12,
dadurch gekennzeichnet,
daß die anionischen ungesättigten Monomere Vinylverbindungen mit Carboxy-, Sulfo- oder Phosphorsäuregruppen darstellen.

14. Verwendung nach den Ansprüchen 1 bis 12,
dadurch gekennzeichnet,
daß die nichtionischen ungesättigten Monomere Vinyl- oder Acrylderivate sind.

15. Verwendung nach den Ansprüchen 1 bis 12,
dadurch gekennzeichnet,
daß die kationischen ungesättigten Monomere quaternäre Ammoniumverbindungen darstellen.

16. Verwendung nach den Ansprüchen 1 bis 15,
dadurch gekennzeichnet,
daß das Gewichtsverhältnis Keton-Aldehyd-Kondensations- bzw. Co-Kondensationsprodukt zu ungesättigtem Monomer 1 : 0,02 bis 1 : 10 beträgt.

17. Verwendung nach den Ansprüchen 1 bis 16,
dadurch gekennzeichnet,
daß man die Pfropfpolymeren in einer Menge von 0,01 bis 5 Gew.-%, bezogen auf das Gewicht des jeweiligen Bindemittels, einsetzt.

## Claims

1. Use of graft polymers of ketone-aldehyde condensation products and/or ketone-aldehyde co-condensation products containing acid groups and/or univalent or polyvalent metal compounds of acid group-containing ketone-aldehyde condensation products and co-condensation products, respectively, in which the condensation product consists of
a) symmetrical or asymmetrical ketones with aliphatic, araliphatic, cyclic or aromatic hydrocarbon moieties with at least one nonaromatic moiety,
b) an aldehyde of the formula R-(CHO)ₙ, n being equal to 1 to 2 and R representing hydrogen, an aliphatic, araliphatic, aromatic or heterocyclic moiety
onto which anionic and/or nonionic and/or cationic unsaturated monomers are grafted as setting retardants for aqueous binder suspensions on the basis of cement, gypsum or anhydrite.

2. Use according to claim 1, characterized in that the total number of the carbon and hetero atoms in the ketones amounts to 3 to 12.

3. Use according to claim 1, characterized in that the total number of the carbon and hetero atoms in the aldehydes has a value from 1 to 11.

4. Use according to claims 1 to 3, characterized in that the molar ratio of ketone to aldehyde is 1:0.5 to 1:18.

5. Use according to claims 1 to 4, characterized in that the co-condensation components of the ketone-aldehyde condensation products containing acid groups are amino plastic formers and/or aromatic compounds or their condensation products.

6. Use according to claim 5, characterized in that the amino plastic former consists of urea, melamine, dicyandiamide or a guanamine.

7. Use according to claim 5, characterized in that the aromatic compound is a phenol derivative.

8. Use according to claim 5, characterized in that the aromatic compound is a naphthalene derivative.

9. Use according to claims 1 to 4, characterized in that the co-condensation component of the ketone-aldehyde condensation products containing acid groups consists of a lignin and/or lignite derivative.

10. Use according to claims 1 to 9, characterized in that the acid groups for the ketone-aldehyde condensation or co-condensation products consist of carboxy groups, sulfo groups, sulfamido groups, sulfoxy groups, sulfoalkylamine groups or sulfoalkyloxy groups.

11. Use according to claims 1 to 10, characterized in that the molar ratio of ketone to acid groups in the ketone-aldehyde condensation products or co-condensation products containing acid groups amounts to 1:0.1 to 1:3.

12. Use according to claims 1 to 11, characterized in that the metal compounds of the condensation products or co-condensation products containing acid groups contain metals of groups II A to VIII A and/or of groups I B to V B.

13. Use according to claims 1 to 12, characterized in that the anionic unsaturated monomers are vinyl compounds with carboxy, sulfo or phosphoric acid groups.

14. Use according to claims 1 to 12, characterized in that the nonionic unsaturated monomers are vinyl or acryl derivatives.

15. Use according to claims 1 to 12, characterized in that the cationic unsaturated monomers are quaternary ammonium compounds.

16. Use according to claims 1 to 15, characterized in that the weight ratio of ketone-aldehyde condensation product or co-condensation product to unsaturated monomer amounts to 1:0.02 to 1:10.

17. Use according to claims 1 to 16, characterized in that the graft polymers are used in an amount of 0.01 to 5 wt.-% with respect to the weight of the particular binder.

## Revendications

1. Utilisation de polymères greffés de produits de condensation de cétones-aldéhydes et/ou de produits de co-condensation de cétones-aldéhydes contenant des groupes acides et/ou de composés métalliques mono- ou polyvalents de produits de condensation ou de co-condensation de cétones-aldéhydes contenant des groupes acides, auquel cas le produit de condensation est constitué
a) de cétones symétriques ou asymétriques avec des restes hydrocarbonés aliphatiques, araliphatiques, cycliques ou aromatiques avec au moins un reste non aromatique,
b) d'un aldéhyde de formule R-(CHO)ₙ, où n = 1 à 2 et R peut être l'hydrogène, un reste aliphatique, araliphatique, aromatique ou hétérocyclique,
sur lequel sont greffés des monomères insaturés anioniques et/ou non ioniques et/ou cationiques, en tant que retardateurs de prise pour des suspensions de liants aqueuses à base de ciment, de gypse ou d'anhydrite.

2. Utilisation selon la revendication 1, caractérisée en ce que le nombre total d'atomes de carbone et d'hétéroatomes dans les cétones s'étend de 3 à 12.

3. Utilisation selon la revendication 1, caractérisée en ce que le nombre total d'atomes de carbone et d'hétéroatomes dans les aldéhydes présente une valeur de 1 à 11.

4. Utilisation selon les revendications 1 à 3, caractérisée en ce que le rapport molaire de cétone:aldéhyde s'étend de 1:0,5 à 1:18.

5. Utilisation selon les revendications 1 à 4, caractérisée en ce que les composants de co-condensation pour les produits de condensation de cétones-aldéhydes contenant des groupes acides sont des formateurs d'aminoplastes et/ou des composés aromatiques, respectivt. leurs produits de condensation.

6. Utilisation selon la revendication 5, caractérisée en ce que le formateur d'aminoplaste est constitué par de l'urée, de la mélamine, du dicyanodiamide ou une guanamine.

7. Utilisation selon la revendication 5, caractérisée en ce que le composé aromatique est un dérivé du phénol.

8. Utilisation selon la revendication 5, caractérisée en ce que le composé aromatique est un dérivé de naphtalène.

9. Utilisation selon les revendications 1 à 4, caractérisée en ce que le composant de co-condensation pour les produits de condensation de cétones-aldéhydes contenant des groupes acides consiste en un dérivé de lignine et/ou de lignite.

10. Utilisation selon les revendications 1 à 9, caractérisée en ce que les groupes acides pour les produits de condensation ou de co-condensation de cétones-aldéhydes consistent en des groupes carboxy, sulfo, sulfamido, sulfoxy, sulfoalkylamine ou sulfoalkyloxy.

11. Utilisation selon les revendications 1 à 10, caractérisée en ce que le rapport molaire de cétone: groupes acides dans les produits de condensation ou de co-condensation de cétones-aldéhydes contenant des groupes acides s'étend de 1 : 0,1 à 1 : 3.

12. Utilisation selon les revendications 1 à 11, caractérisée en ce que les composés métalliques des produits de condensation ou de co-condensation de cétones-aldéhydes contenant des groupes acides contiennent des métaux des groupes II A à VIII A et/ou des groupes I B à V B.

13. Utilisation selon les revendications 1 à 12, caractérisée en ce que les monomères insaturés anioniques représentent des composés vinyliques avec des groupes carboxy, sulfo ou acide phosphorique.

14. Utilisation selon les revendications 1 à 12, caractérisée en ce que les monomères insaturés non ioniques sont des dérivés vinyliques ou acryliques.

15. Utilisation selon les revendications 1 à 12, caractérisée en ce que les monomères insaturés cationiques représentent des composés d'ammonium quaternaire.

16. Utilisation selon les revendications 1 à 15, caractérisée en ce que le rapport pondéral du produit de condensation ou de co-condensation de cétones-aldéhydes au monomère insaturé s'étend de 1 : 0,02 à 1 : 10.

17. Utilisation selon les revendications 1 à 16, caractérisée en ce qu'on met en oeuvre les polymères greffés en une quantité de 0,01 à 5% en poids, rapportés au poids du liant respectif.
